# EUROPÄISCHE PATENTSCHRIFT

(11) **EP 2 851 168 B1**
(45) Veröffentlichungstag und Bekanntmachung des Hinweises auf die Patenterteilung: **11.01.2017**
(21) Anmeldenummer: 14183155.2
(22) Anmeldetag: 02.09.2014
(51) Int. Cl.: B26D 7/20, B31D 1/02

(54) **Vorrichtung zum Ausstanzen von Etiketten mit Gegenstanzband**
Device for punching out labels with counter punch tape
Dispositif de matriçage d'étiquettes à l'aide de bande de contre-pression

(30) Priorität: 19.09.2013 DE 102013015618
(43) Veröffentlichungstag der Anmeldung: 25.03.2015
(73) Patentinhaber: Gallus Druckmaschinen GmbH, 35428 Langgöns-Oberkleen (DE)
(72) Erfinder: Bödeker, Andreas, 35428 Langgöns (DE); Bangel, Dieter, 35625 Hüttenberg (DE)
(74) Vertreter: Fritz, Martin Richard

(56) Entgegenhaltungen:
- WO-A1-02/14069
- WO-A1-99/03737
- DE-A1- 10 356 037
- GB-A- 865 165
- US-A- 3 574 026

## Beschreibung

Die Erfindung betrifft eine Vorrichtung zum Ausstanzen gemäß dem Oberbegriff von Anspruch 1 und ein Verfahren zum Ausstanzen von Etiketten gemäß Anspruch 9.

### Stand der Technik

Vorrichtungen zum Stanzen von flachem mehrschichtigem Gut mit Stanzzylinder und Gegenstanzzylinder sind bekannt. Wenigstens eine Schicht des flachen mehrschichtigen Gutes ist dabei in einem vom Stanzzylinder und Gegenstanzzylinder gebildeten Stanzspalt durchstanzbar, ohne alle Schichten vollständig zu durchtrennen, wobei die Breite des Stanzspaltes einstellbar ist.

In dieser Darstellung wird der Ausdruck "stanzen" einerseits im engeren Sinne verwendet, was "durchtrennen", "perforieren" oder "lochen" impliziert, andererseits auch im weiteren Sinne als "prägen", also "verformen" oder "eindrücken" verstanden. Entsprechendes gilt für ähnliche grammatikalische Formen, wie beispielsweise "stanzbar", welches im engeren Sinne als "durchtrennbar", "perforierbar" oder "lochbar" und im weiteren Sinne als "prägbar", "verformbar" oder "eindrückbar" verstanden wird. Nur zur Vereinfachung der Darstellung, aber ohne Einschränkung dieser angesprochenen Konnotationen werden der Ausdruck "stanzen" und ähnliche grammatikalische Formen verwendet. Auch werden nachfolgend die Begriffe "Stanze", "Stanzvorrichtung" und "Stanzmaschine" synonym verwendet.

Beim Stanzen von flachem mehrschichtigem Gut, beispielsweise Selbstklebeetiketten, insbesondere in einer Vorrichtung zum Ausstanzen in einer Druckmaschine, müssen ein Obermaterial, ein oben liegendes Bedruckstoffmaterial (eigentliches Etikettenmaterial, nachfolgend als Etikettenschicht bezeichnet) und eine Klebstoffschicht durchstanzt (insbesondere durchtrennt) werden, ohne ein darunter liegendes Trägermaterial (nachfolgend als Trägerschicht bezeichnet) zu verletzen, insbesondere zu durchtrennen. Das flache mehrschichtige Gut kann insbesondere bahnförmig sein.

Der Stanzvorgang ist materialabhängig, so dass eine Variation oder Einstellung der Vorrichtung, beispielsweise der Positionen ihrer Komponenten oder der Stanzstärke, derart erfolgen muss, dass in einem Bereich von wenigen Mikrometern bis einigen Zehntel Millimetern die Stanztiefe verändert werden kann. Geläufig erfolgt das Stanzen in einer sogenannten Rotastanze (Rotationsstanzwerk) oder einem Rotapräger (Rotationsprägewerk): In einem zwischen einem Stanzzylinder, welcher eine Stanzform oder eine Prägeform trägt, und einem Gegenstanzzylinder gebildeten Stanzspalt wirkt die Stanzform oder die Prägeform auf das flache mehrschichtige Gut ein, welches eine plastische Änderung in Form einer Durchtrennung oder einer Einprägung erfährt. Alternativ zu diesen beschriebenen mechanischen Stanzeinrichtungen sind auch berührungslose Laserstanzeinrichtungen bekannt.

Aus Kostengründen und aus Umweltschutzgründen gibt es momentan Bestrebungen, mit einer möglichst dünnen Trägerschicht auszukommen. Die Gefahr bei der Bearbeitung der Substratbahn durch die obenstehend beschriebenen Stanzeinrichtungen, dass beim Ausstanzen der Etiketten aus der Etikettenschicht auch die Trägerschicht verletzt wird ist dabei wesentlich größer. Im schlimmsten Fall kann die Trägerschicht reißen und einen Maschinenstopp verursachen. Um diesem Problem zu begegnen, sind Einrichtungen bekannt, welche die Etikettenschicht vor dem Ausstanzprozess von der Trägerschicht trennen, so dass beim Ausstanzen die Trägerschicht nicht verletzt werden kann. Die US 3,574,026 offenbart eine solche Einrichtung: Eine Substratbahn wird vor der Stanzeinheit, ausgeführt als rotierende Stanzzylinder, aufgetrennt. Während die Trägerschicht um die Stanzeinheit umgelenkt wird, passiert die Etikettenschicht die Stanzwerkzeuge. Während dem Transport der Etikettenschicht durch die Stanzwerkzeuge wird die Etikettenschicht durch saugende Transportbänder geführt, welche die Oberseite der Etikettenschicht kontaktieren. Nach erfolgtem Ausstanzprozess werden die Etikettenschicht und die Trägerschicht wieder zusammenlaminiert. Eine ähnliche Einrichtung ist in der EP 1055 604 A1 beschrieben. Anstelle der umlaufenden Saugbänder wird hier eine rotierende Saugwalze verwendet.

Die GB 865 165 A offenbart eine Vorrichtung gemäß des Oberbegriffs des Anspruchs 1 zum Ausstanzen von Etiketten mit einem Stanzzylinder und einem Gegenstanzzylinder.
Die DE 103 56 037 A1 zeigt eine Vorrichtung zum Stanzen einer Wellpappebahn mit einem Stanzzylinder und einem Gegenstanzzylinder. Um den Verschleiß der Stanzmesser zu reduzieren, ist der Gegenstanzzylinder mit einem umlaufenden, weicheren Gurt versehen.

Nachteilig an diesen Einrichtungen ist einerseits, dass die Etikettenschicht mit ihrer mit Klebstoff versehenen Seite an den Stanzwerkzeugen anhaften kann und es zu einer Verunreinigung der Stanzwerkzeuge und infolgedessen zu Qualitätseinbußen des Ausstanzprozesses kommen kann. Zum anderen stellt sich der Transport der Etikettenschicht über Saugbänder bzw. Saugwalzen als aufwändig dar und der Saugluftverbrauch wird als störend empfunden.

### Aufgabenstellung

Aufgabe der vorliegenden Erfindung ist es daher, eine Vorrichtung zum Ausstanzen von Etiketten zu schaffen, und ein Verfahren zum Ausstanzen von Selbstklebe-Etiketten zu beschreiben, wobei eine dünne Trägerschicht Verwendung finden kann, und sichergestellt wird, dass die Trägerschicht beim Ausstanzen nicht beschädigt wird und auf einen Saugluftbedarf zum Transportieren der Etikettenschicht verzichtet werden kann.

Gelöst wird diese Aufgabe durch eine Vorrichtung zum Ausstanzen von Etiketten mit den Merkmalen von Anspruch 1 und durch ein Verfahren zum Ausstanzen von Selbstklebe-Etiketten mit den Merkmalen von Anspruch 9.

Die erfindungsgemäße Vorrichtung zum Ausstanzen von Etiketten besitzt eine Abwickeleinrichtung zum Bereitstellen einer insbesondere bedruckten Substratbahn, wobei die Substratbahn eine Trägerschicht, einen sogenannten Liner, und eine Etikettenschicht, ein sogenanntes Facestock, aufweist, welche einen selbstklebenden Substratverbund bilden. Weiter besitzt die Vorrichtung zum Ausstanzen eine - in Bahnlaufrichtung gesehen - stromabwärtig nachfolgend angeordnete Stanzeinrichtung zum Ausstanzen von Etiketten aus der Etikettenschicht der Substratbahn und eine - in Bahnlaufrichtung gesehen - stromabwärtig nachfolgend angeordnete Aufwickeleinrichtung zum Aufnehmen der Substratbahn. Erfindungsgemäß besitzt die Stanzeinrichtung eine Delaminiereinrichtung zum Trennen der Etikettenschicht von der Trägerschicht, ein weiter stromabwärtig angeordnetes metallenes, nicht saugendes umlaufendes Gegenstanzband als Endlosband zum Transportieren der Etikettenschicht während des Stanzvorgangs, wobei die Etikettenschicht an ihrer klebenden Seite temporär mit dem Gegenstanzband verbunden wird, und eine weiter stromabwärtig angeordnete Relaminiereinrichtung zum Wiederverbinden der mit Stanzungen versehenen Etikettenschicht mit der ursprünglichen Trägerschicht. In vorteilhafter Weise werden durch das metallene Gegenstanzband ein sicherer Transport der Etikettenschicht während dem Ausstanzprozess und ein exaktes Ausstanzen der Etiketten sichergestellt. Vorteilhaft ist auch, dass die Stanzwerkzeuge nicht von der klebenden Seite sondern von der Oberflächenseite der Etikettenschicht auf die Etikettenschicht einwirken.

In einer besonders vorteilhaften und daher bevorzugten Weiterbildung der erfindungsgemäßen Vorrichtung zum Ausstanzen von Etiketten sind parallel zur Stanzeinrichtung Transportrollen angeordnet zum Transportieren der Trägerschicht während dem Stanzvorgang.

In einer vorteilhaften Ausführungsvariante der Vorrichtung zum Ausstanzen von Etiketten sind die Delaminiereinrichtung als Delaminierungswalze und/oder die Relaminiereinrichtung als Laminierwalze ausgeführt.

In einer ersten vorteilhaften Ausführungsvariante ist die Stanzeinrichtung derart ausgebildet, dass dem umlaufenden Gegenstanzband ein Stanzzylinder zugeordnet ist zum Ausstanzen der Etiketten aus der Etikettenschicht. Auch kann dem Stanzzylinder gegenüberliegend unterhalb des Gegenstanzbandes eine Gegenwalze angeordnet sein, wobei die Gegenwalze mit einer Gummibeschichtung versehen sein kann. Zusätzlich kann auch das Gegenstanzband an seiner Unterseite mit einer elastischen Schicht versehen sein. Die Gummibeschichtung als auch die elastische Schicht tragen aufgrund ihrer Dämpfungseigenschaften zu einem deutlich reduzierten Stanzwerkzeugverschleiß des Stanzzylinders bei.

In einer zweiten Ausführungsvariante ist die Stanzeinrichtung derart ausgeführt, dass dem umlaufenden Gegenstanzband eine Laserstanzeinheit zum Ausstanzen der Etiketten aus der Etikettenschicht zugeordnet ist.

In einer besonders vorteilhaften und daher bevorzugten Weiterbildung der Vorrichtung zum Ausstanzen von Etiketten weist das Gegenstanzband eine Spezialbeschichtung auf, insbesondere eine Antihaftbeschichtung. Dadurch wird in vorteilhafter Weise erreicht, dass sich die Etikettenschicht nach erfolgtem Ausstanzprozess wieder einfach von dem Gegenstanzband abziehen lässt.

In vorteilhafter Weiterbildung weist die Vorrichtung zum Ausstanzen eine Gitterabzugseinrichtung auf, welche insbesondere als Gitterabzugswalze ausgeführt ist, welche stromaufwärtig oder stromabwärtig der Relaminiereinrichtung angeordnet sein kann.

Weiterhin wird es als vorteilhaft angesehen, wenn die Spannung des umlaufenden Gegenstanzbandes variiert werden kann. Dadurch wird bei der Verwendung von mechanischen Stanzwerkzeugen eine geringfügige Einstellbarkeit der Schnittkraft ermöglicht.

Die Erfindung betrifft auch ein Verfahren zum Ausstanzen von Selbstklebe-Etiketten, insbesondere mittels einer wie obenstehend beschriebenen Vorrichtung aus einer insbesondere bedruckten Substratbahn, wobei die Substratbahn eine Trägerschicht und eine Etikettenschicht aufweist. In einem ersten Schritt wird die Etikettenschicht von der Trägerschicht getrennt, was als Delaminieren bezeichnet wird. In einem zweiten Schritt wird die Etikettenschicht mit ihrer klebenden Seite auf ein umlaufendes, endloses, nicht saugendes Gegenstanzband aufgebracht und es erfolgt das Ausstanzen der Etiketten. Währenddessen wird die Trägerschicht separat weiter transportiert. Nachfolgend wird die mit Stanzungen versehene Etikettenschicht wieder mit der ursprünglichen Trägerschicht verbunden, was als Relaminieren bezeichnet wird, und die Substratbahn kann weiter transportiert werden.

In vorteilhafter Weiterbildung des erfindungsgemäßen Verfahrens wird entweder nach dem Ausstanzen der Etiketten oder nach dem Wiederverbinden von Etikettenschicht und Trägerschicht das die Etiketten umgebende Gitter als Teil der Etikettenschicht abgezogen. Damit stehen die Etiketten auf der Trägerschicht zur Weiterverarbeitung, beispielsweise zum Aufbringen auf Produkte zur Verfügung, während das Gitter als Abfall entsorgt werden kann.

Die beschriebene Erfindung und die beschriebenen vorteilhaften Weiterbildungen der Erfindung stellen auch in Kombination miteinander vorteilhafte Weiterbildungen der Erfindung dar.

Hinsichtlich weiterer Vorteile und in konstruktiver und funktioneller Hinsicht vorteilhafter Ausgestaltungen der Erfindung wird auf die Unteransprüche sowie die Beschreibung von Ausführungsbeispielen unter Bezugnahme auf die beiliegenden Figuren verwiesen.

### Ausführungsbeispiel

Die Erfindung soll an Hand beigefügter Figuren noch näher erläutert werden. Einander entsprechende Elemente und Bauteile sind in den Figuren mit gleichen Bezugszeichen versehen. Zugunsten einer besseren Übersichtlichkeit der Figuren wurde auf eine maßstabsgetreue Darstellung verzichtet.
Es zeigen in schematischer Darstellung
- Fig. 1: eine Etikettendruckmaschine mit einer erfindungsgemäßen Vorrichtung zum Ausstanzen von Etiketten
- Fig. 2: die erfindungsgemäße Vorrichtung zum Ausstanzen von Etiketten
- Fig. 3a: eine erste Alternative Ausführungsform der Vorrichtung zum Ausstanzen von Etiketten
- Fig. 3b: eine zweite Alternative Ausführungsform der Vorrichtung zum Ausstanzen von Etiketten

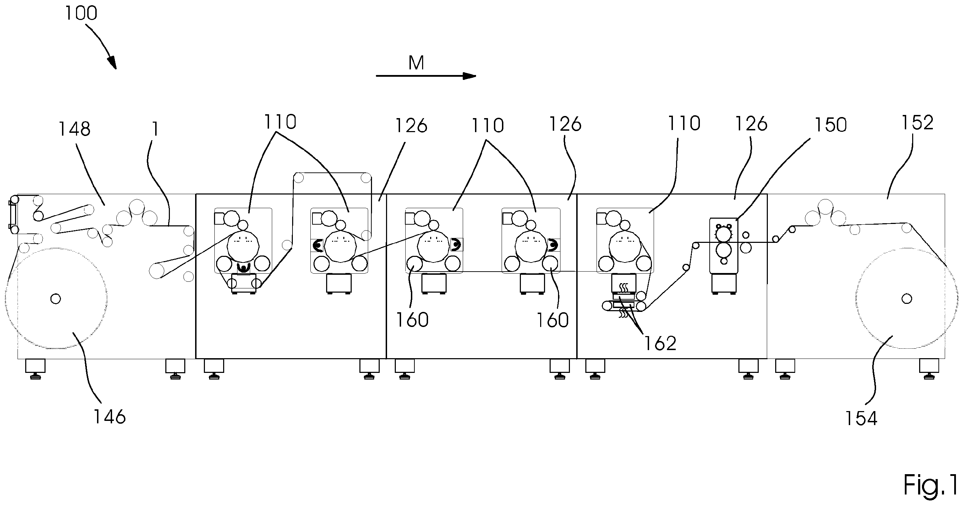

In der Figur 1 ist eine Ansicht einer bevorzugten Ausführungsform einer Druckmaschine 100, genauer einer Schmalbahn-Etikettendruckmaschine in Reihenbauweise, mit in horizontaler Richtung folgenden Druckwerken 110 gezeigt. Die Etikettendruckmaschine dient der Bearbeitung eines Substrats 1 in Bahnform. Das Substrat wird von einer Substratrolle 146 in einem Zuführteil 148 der Druckmaschine 100 abgerollt und entlang eines Weges in Maschinenlaufrichtung M durch die Druckmaschine 100 geführt. Die Druckmaschine 100 kann eine Mehrzahl von Gestellmodulen 126, hier beispielhaft drei Gestellmodule 126, aufweisen. In dieser Ausführungsform sind jeweils zwei Druckwerke 110 beziehungsweise ein Druckwerk 110 und ein Bearbeitungswerk 150, hier eine Vorrichtung zum Ausstanzen der Etiketten auf dem bahnförmigen Substrat 1, an einem Gestellmodul 126 aufgenommen. Nach den einzelnen Bearbeitungsstationen folgt ein Auslaufteil 152, in welchem die fertigen Produkte in eine Etikettenrolle 154 aufgewickelt werden. Zuführteil 148, Gestellmodule 126 und Auslaufteil 152 sind lösbar bzw. trennbar miteinander verbunden sodass sich ein modularer Aufbau der Druckmaschine 100 ergibt. In der Darstellung der einzelnen Druckwerke 110, hier Flexodruckwerke sind neben den Druckformzylindern, den Gegendruckzylindern und den Farbauftragswalzen auch Kammerrakel gezeigt. Des Weiteren weisen die Druckwerke 110 in der Druckmaschine 100 diverse Trocknungseinrichtungen auf: Den Gegendruckzylindern sind an dem jeweiligen Druckspalt des Druckwerks 110 nachgeordnet UV-Trocknungseinrichtungen zugeordnet, so dass das bedruckte Substrat 1 direkt auf dem Gegendruckzylinder getrocknet werden kann. Die Druckwerke 110 weisen auch Bahnleitwalzen 160 zur Führung des bahnförmigen Substrats 1 auf. In der gezeigten Ausführungsform umfasst das fünfte Druckwerk 110 eine Heißlufttrocknungseinrichtung 162. Alternativ könnte auch hier eine UV- oder eine IR-Trocknungseinrichtung eingesetzt werden. Nachfolgend ist eine erfindungsgemäße Vorrichtung zum Ausstanzen 150 angeordnet, welche untenstehend näher beschrieben wird. Zusätzlich zu der Vorrichtung zum Ausstanzen 150 kann auch ein Prägewerk, beispielsweise ein Heißfolienprägewerk Verwendung finden.
Alternativ zu den dargestellten Flexodruckwerken können auch Offset-Druckwerke und Rotationssiebdruckwerke eingesetzt werden.

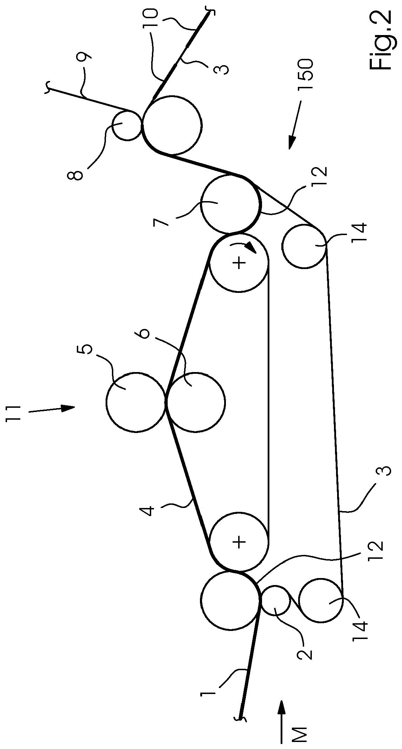

In Figur 2 ist die Vorrichtung zum Ausstanzen 150 näher dargestellt: Eine Substratbahn 1 wird in Maschinenlaufrichtung M, auch als Bahnlaufrichtung bezeichnet, durch die Vorrichtung zum Ausstanzen 150 bewegt. Die Substratbahn 1 besteht dabei aus einer oberen Schicht, der in der Regel bedruckten Etikettenschicht 12, und einer unteren Schicht, der Trägerschicht 3. Beide Schichten 3, 12 sind durch eine nicht dargestellte Klebstoffschicht miteinander verbunden. Durch die Delaminierungswalze 2 wird die Substratbahn 1 aufgetrennt, derart, dass die Etikettenschicht 12 durch die Stanzeinheit 11 weiter transportiert und die Trägerschicht 3 mittels Transportwalzen 14 um die Stanzeinheit 11 herum umgeleitet wird. Die Etikettenschicht 12 wird von der Delaminierungswalze 2 an ein Gegenstanzband 4 übergeben, derart, dass die Etikettenschicht mit ihrer mit Klebstoff versehenen Seite auf dem Gegenstanzband 4 anhaftet. Das Gegenstanzband 4 ist als umlaufendes, endloses Metallband ausgeführt, welches an seiner Oberseite mit einer Antihaftbeschichtung versehen sein kann, so dass sich die Etikettenschicht 12 nach erfolgtem Ausstanzprozess wieder einfach ablösen lässt. Von dem Gegenstanzband 4 wird die Etikettenschicht 12 durch die Stanzeinheit 11 hindurch transportiert. Die Stanzeinheit 11 ist als Rotationsstanze mit Stanzzylinder 5 und Gegenwalze 6 ausgeführt. Die Gegenwalze 6 ist unterhalb des Gegenstanzbandes 4 angeordnet. Nach erfolgtem Ausstanzprozess wird die Etikettenschicht 12 durch eine Laminierwalze 7 wieder mit der Trägerschicht 3 verbunden und beide Schichten 3, 12 werden gemeinsam weiter transportiert. Nachfolgend wird mittels einer Gitterabzugswalze 8 der sich um die Etiketten 10 herum befindliche Abfall, das sogenannte Gitter 9, abgezogen, so dass nur noch die Etiketten 10 auf der Trägerschicht 3 weiter transportiert werden.

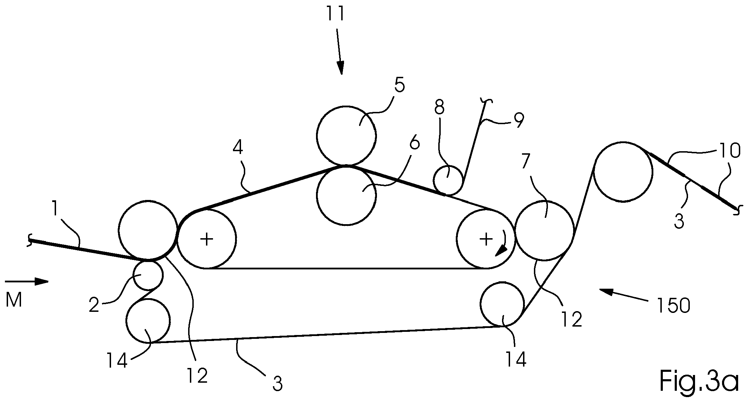

In der in Figur 3a dargestellten Ausführungsvariante wird das Gitter 9 durch die Gitterabzugswalze 8 bereits direkt nach dem Ausstanzprozess abgezogen, so dass von der Laminierungswalze 7, welche als Vakuumwalze ausgeführt ist, nur noch die Etiketten 10 auf die Trägerschicht 3 aufgebracht werden. Die weitere Ausgestaltung der Vorrichtung zum Ausstanzen 150 entspricht der in Fig. 2 dargestellten und obenstehend beschriebenen Ausführung.

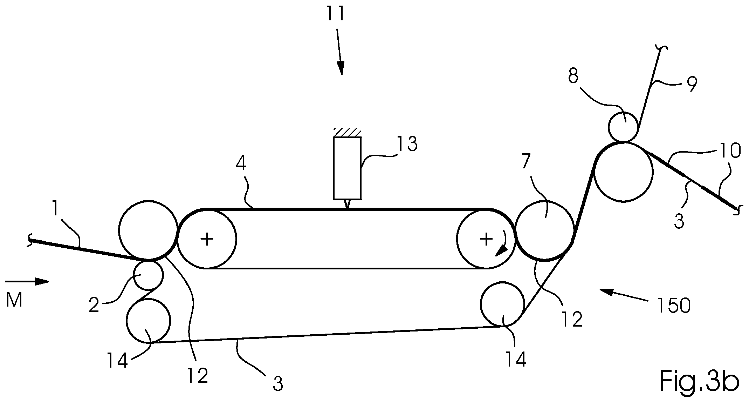

Gemäß der in Figur 3b dargestellten Ausführungsvariante besitzt die Stanzeinheit 11 keine mechanischen Stanzwerkzeuge, sondern eine Laserstanzeinheit 13. Die weitere Ausgestaltung der Vorrichtung zum Ausstanzen 150 entspricht der in Fig. 2 dargestellten und obenstehend beschriebenen Ausführung.

### Bezugszeichenliste

- 1: Substratbahn
- 2: Delaminierungswalze
- 3: Trägerschicht (Liner)
- 4: Gegenstanzband
- 5: Stanzzylinder
- 6: Gegenwalze
- 7: Laminierwalze
- 8: Gitterabzugswalze
- 9: Gitter
- 10: ausgestanztes Etikett
- 11: Stanzeinheit
- 12: Etikettenschicht (Facestock)
- 13: Laserstanzeinheit
- 14: Transportwalze

- 100: Druckmaschine
- 110: Druckwerk
- 126: Gestellmodul
- 146: Substratrolle
- 148: Zuführstation
- 150: Vorrichtung zum Ausstanzen
- 152: Auslaufstation
- 154: Etikettenrolle
- 160: Bahnleitwalze
- 162: Heißlufttrockner

- M: Bahnlaufrichtung / Maschinenlaufrichtung

## Patentansprüche

1. Vorrichtung (150) zum Ausstanzen von Etiketten (10) mit einer Abwickeleinrichtung (148) zum Bereitstellen einer insbesondere bedruckten Substratbahn (1), wobei die Substratbahn (1) eine Trägerschicht (3) und eine Etikettenschicht (12) aufweist, eine - in Bahnlaufrichtung (M) gesehen - stromabwärtige Stanzeinrichtung (11) zum Ausstanzen von Etiketten und eine - in Bahnlaufrichtung (M) gesehen - stromabwärtige Aufwickeleinrichtung (152) zum Aufnehmen der Substratbahn (1),
wobei die Stanzeinrichtung (11) eine Delaminierwalze (2) zum Trennen der Etikettenschicht (12) von der Trägerschicht (3), und eine Relaminiereinrichtung (7) zum Verbinden der mit Stanzungen versehenen Etikettenschicht (12) mit der Trägerschicht (3) besitzt,
**dadurch gekennzeichnet,**
**dass** die Stanzeinrichtung (11) ein metallenes, nichtsaugendes umlaufendes Gegenstanzband (4) zum Transportieren der Etikettenschicht (12) während dem Stanzvorgang besitzt, wobei die Etikettenschicht (12) an ihrer klebenden Seite temporär mit dem Gegenstanzband (4) verbindbar ist, und
wobei die Etikettenschicht (12) von der Delaminierwalze (2) an das Gegenstanzband (4) übergeben wird,

2. Vorrichtung zum Ausstanzen von Etiketten nach Anspruch 1,
**dadurch gekennzeichnet,**
**dass** parallel zur Stanzeinrichtung (11) Transportrollen (14) angeordnet sind, zum Transportieren der Trägerschicht (3) während dem Stanzvorgang.

3. Vorrichtung zum Ausstanzen von Etiketten nach einem der vorangehenden Ansprüche,
**dadurch gekennzeichnet,**
**dass** die Delaminiereinrichtung als Delaminierungswalze (2) und/oder die Delaminiereinrichtung als Laminierwalze (7) ausgeführt ist.

4. Vorrichtung zum Ausstanzen von Etiketten nach einem der vorangehenden Ansprüche,
**dadurch gekennzeichnet,**
**dass** dem umlaufenden Gegenstanzband (4) ein Stanzzylinder (5) zugeordnet ist zum Ausstanzen der Etiketten (10) aus der Etikettenschicht (12).

5. Vorrichtung zum Ausstanzen von Etiketten nach Anspruch 4,
**dadurch gekennzeichnet,**
**dass** dem Stanzzylinder (5) gegenüberliegend, unterhalb des Gegenstanzbandes (4) eine Gegenwalze (6) angeordnet ist, wobei die Gegenwalze (6) insbesondere mit einer Gummibeschichtung versehen ist.

6. Vorrichtung zum Ausstanzen von Etiketten nach einem der Ansprüche 1 bis 3, **dadurch gekennzeichnet,**
**dass** dem umlaufenden Gegenstanzband (4) eine Laserstanzeinheit (13) zugeordnet ist zum Ausstanzen der Etiketten (10) aus der Etikettenschicht (12).

7. Vorrichtung zum Ausstanzen von Etiketten nach einem der vorangehenden Ansprüche,
**dadurch gekennzeichnet,**
**dass** das Gegenstanzband (4) an seiner äußeren Oberfläche eine Spezialbeschichtung aufweist, insbesondere eine Antihaftbeschichtung.

8. Vorrichtung zum Ausstanzen von Etiketten nach einem der vorangehenden Ansprüche,
**dadurch gekennzeichnet,**
**dass** eine Gitterabzugseinrichtung, insbesondere eine Gitterabzugswalze (8), stromaufwärtig oder stromabwärtig der Relaminiereinrichtung (7) angeordnet ist.

9. Verfahren zum Ausstanzen von Selbstklebe-Etiketten (10), mittels einer Vorrichtung (150) nach einem der vorangehenden Ansprüche aus einer insbesondere bedruckten Substratbahn (1), wobei die Substratbahn (1) eine Trägerschicht (3) und eine Etikettenschicht (13) aufweist, mit nachfolgenden Schritten:
a) Trennen der Etikettenschicht (12) von der Trägerschicht (3) mittels einer Delaminierwalze (2)
b) Aufbringen der Etikettenschicht (12) mit der klebenden Seite auf ein umlaufendes, endloses Gegenstanzband (4),
wobei die Etikettenschicht (12) von der Delaminierwalze (2) an das Gegenstanzband (4) übergeben wird, und Ausstanzen der Etiketten (10)
c) Weitertransport der Trägerschicht (3) während Schritt b)
d) Verbinden der mit Stanzungen versehenen Etikettenschicht (12) mit der Trägerschicht (3).

10. Verfahren zum Ausstanzen von Selbstklebe-Etiketten nach Anspruch 9, wobei nach Schritt b) oder Schritt d) das Gitter (9) abgezogen wird.

## Claims

1. Device (150) for punching out labels (10) comprising an unwinding device (148) for providing a substrate web (1), in particular a printed substrate web (1), the substrate web (1) having a carrier layer (3) and a label layer (12), a punching device (11) disposed downstream in a web-conveying direction (M) for punching out labels, and a winding device (152) disposed downstream in the web-conveying direction (M) and configured to receive the substrate web (1),
wherein the punching device (11) includes a delaminating roller (2) for separating the label layer (12) from the carrier layer (3) and a relaminating device (7) for connecting the label layer (12) provided with the punchings to the carrier layer,
**characterized in**
**that** the punching device (11) comprises a metallic non-suction revolving counterpunching belt (4) for conveying the label layer (12) during the punching operation, wherein the adhesive side of the label layer (12) is temporarily connectible to the counterpunching belt (4), and
wherein the label layer (12) is transferred to the counterpunching belt (4) by the delaminating roller (2).

2. Device for punching out labels according to Claim 1,
**characterized in**
**that** transport rollers (14) are disposed to be parallel with the punching device (11) to transport the carrier layer (3) during the punching process.

3. Device for punching out labels according to any one of the preceding claims,
**characterized in**
**that** the delaminating device is embodied as a delamination roller (2) and/or that the delaminating device is embodied as a laminating roller (7).

4. Device for punching out labels according to any one of the preceding claims,
**characterized in**
**that** a punching cylinder (5) for punching the labels (10) out of the label layer (12) is assigned to the revolving counterpunching belt (4).

5. Device for punching out labels according to Claim 4,
**characterized in**
**that** a counterroller (6) is disposed opposite the punching cylinder (5), below the counterpunching belt (4), the counterroller (6) in particular having a rubber coating.

6. Device for punching out labels according to any one of claims 1-3,
**characterized in**
**that** a laser punching unit (13) is assigned to the revolving counterpunching belt (4) to punch the labels (10) out of the label layer (12).

7. Device for punching out labels according to any one of the preceding claims,
**characterized in**
**that** the counterpunching belt (4) has a special coating, in particular a non-stick coating, on its outer surface.

8. Device for punching out labels according to any one of the preceding claims,
**characterized in**
**that** a matrix stripping device, in particular a matrix stripping roller (8), is disposed upstream or downstream of the relaminating device (7).

9. A method for punching out self-adhesive labels (10) out of a substrate web (1), in particular a printed substrate web (1), by means of a device (150) according to any one of the preceding claims wherein the substrate web (1) comprises a carrier layer (3) and a label layer (13), comprising the following steps of
a) separating the label layer (12) from the carrier layer (3) by means of a delaminating roller (2)
b) applying the adhesive side of the label layer (12) to a revolving endless counterpunching belt (4),
wherein the label layer (12) is transferred to the counterpunching belt (4) by the delaminating roller (2), and punching out the labels (10)
c) moving the carrier layer (3) along during step b)
d) connecting the label layer (12) that has been provided with the punchings to the carrier layer (3).

10. Method for punching out self-adhesive labels according to Claim 9, wherein the matrix (9) is removed after step b) or step d).

## Revendications

1. Dispositif (150) pour découper des étiquettes (10) comportant un dispositif de déroulement (148) pour fournir une bande de substrat particulièrement imprimée (1), la bande de substrat (1) présentant une couche de support (3) et une couche d'étiquettes (12), en aval - vu dans le sens de défilement de la bande (M) - un dispositif de coupe (11) pour découper des étiquettes et en aval - vu dans le sens de défilement de la bande (M) - un dispositif d'enroulement (152) destiné à recevoir la bande de substrat (1),
le dispositif de coupe (11) présentant un rouleau de délaminage (2) pour séparer la couche d'étiquettes et un dispositif de relaminage (7) pour relier la couche d'étiquettes (12) munie de perforations à la couche de support (3),
**caractérisé en ce**
**que** le dispositif de coupe (11) présente une bande de contre-découpe (4) métallique circulaire, non-aspirateur (4) pour le transport de la couche d'étiquettes (12) pendant le processus de découpe, la couche d'étiquettes (12) pouvant être reliée sur son côté adhésif temporairement à la bande de contre-découpe (4) et la couche d'étiquettes (12) étant transférée à la bande de contre-découpe (4).

2. Dispositif pour découper des étiquettes selon la revendication 1,
**caractérisé en ce**
**que** des rouleaux de transport (14) sont disposés parallèlement au dispositif de coupe (11) pour transporter la couche de support (3) pendant l'opération de coupe.

3. Dispositif pour découper des étiquettes selon l'une des revendications précédentes,
**caractérisé en ce**
**que** le dispositif de délaminage est conçu comme un rouleau de délaminage (2) et/ou rouleau de laminage (7).

4. Dispositif pour découper des étiquettes selon l'une des revendications précédentes,
**caractérisé en ce**
**qu'**un cylindre de découpe (5) est associée à la bande de contre-découpe circulaire (4) pour découper des étiquettes (10) de la couche d'étiquettes (12).

5. Dispositif pour découper des étiquettes selon la revendication 4,
**caractérisé en ce**
**qu'**un contre-rouleau (6) est disposé à l'opposé du cylindre de découpe (5) en dessous de la bande de contre-découpe (4), le contre-rouleau (6) étant muni en particulier d'un revêtement en caoutchouc.

6. Dispositif pour découper des étiquettes selon l'une des revendications 1 à 3,
**caractérisé en ce**
**qu'**une unité de découpe laser (13) est associée à la bande de contre-découpe (4) circulaire pour découper les étiquettes (10) à partir de la couche d'étiquettes (12).

7. Dispositif pour découper des étiquettes selon l'une des revendications précédentes,
**caractérisé en ce**
**que** la bande de contre-découpe (4) présente sur sa surface extérieure un revêtement spécial, en particulier un revêtement antiadhésif.

8. Dispositif pour découper des étiquettes selon l'une des revendications précédentes,
**caractérisé en ce**
**qu'**un dispositif de retrait de matrice, en particulier un rouleau de retrait de matrice (8), est disposé en amont ou en aval du dispositif de relaminage (7).

9. Procédé pour la découpe d'étiquettes auto-adhésives (10), au moyen d'un dispositif (150) selon l'une des revendications précédentes à partir d'une bande de substrat particulièrement imprimée (1), la bande de substrat (1) présentant une couche de support (3) et une couche d'étiquettes (13), en utilisant les étapes suivantes:
a) séparation de la couche d'étiquettes (12) de la couche de support (3) au moyen du rouleau de délaminage (2)
b) application de la couche d'étiquettes (12) avec le côté adhésif sur une bande de contre-découpe (4) circulaire sans fin de bande, la couche d'étiquettes (12) étant transférée du rouleau de délaminage (2) à la bande de contre-découpe (4), et découpe des étiquettes (10),
c) poursuite du transport de la couche de support (3) au cours de l'étape b)
d) liaison de la couche d'étiquettes (12) munie de perforations à la couche support (3).

10. Procédé pour la découpe d'étiquettes auto-adhésives selon la revendication 9, la matrice étant retirée après l'étape b) ou l'étape d).
